(19) Europäisches Patentamt
European Patent Office
Office européen des brevets

(11) EP 4 737 496 A1

(12) **EUROPÄISCHE PATENTANMELDUNG**

(43) Veröffentlichungstag:
**06.05.2026 Patentblatt 2026/19**

(21) Anmeldenummer: **24210190.5**

(22) Anmeldetag: **31.10.2024**

(51) Internationale Patentklassifikation (IPC):
***C08G 18/08*** (2006.01) ***C08G 18/22*** (2006.01)
***C08G 18/28*** (2006.01) ***C08G 18/32*** (2006.01)
***C08G 18/73*** (2006.01) ***C08G 18/75*** (2006.01)
***C08G 18/76*** (2006.01)

(52) Gemeinsame Patentklassifikation (CPC):
**C08G 18/0852; C08G 18/222; C08G 18/2825; C08G 18/3206; C08G 18/73; C08G 18/755; C08G 18/7671**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG**
**51373 Leverkusen (DE)**

(72) Erfinder:
- **Hocke, Heiko**
  **51375 Leverkusen (DE)**
- **Peerenboom, Simon**
  **47495 Rheinberg (DE)**
- **Muenchrath, Rene**
  **51061 Köln (DE)**

(74) Vertreter: **Levpat**
**c/o Covestro AG**
**Gebäude K12**
**51365 Leverkusen (DE)**

(54) **VERFAHREN ZUR HERSTELLUNG EINES THERMOPLASTISCHEN POLYURETHAN-PULVERS MITTELS FÄLLUNGSPOLYMERISATION**

(57) Die Erfindung betrifft ein Verfahren zur Herstellung eines thermoplastischen Polyurethan-Pulvers mittels Fällungspolymerisation, umfassend die Schritte:
i. Bereitstellung
A) eines Lösungsmittels;
B) wenigstens eines Polyols B1) mit einer Molmasse von 60 g/mol bis 250 g/ mol;
C) wenigstens eines Diisocyanats C1),
D) optional eines Katalysators;
E) optional eines Kettenregulators E1) und/oder eines Additivs E2);
wobei zusätzlich B) mindestens ein weiteres von Polyol B1) verschiedenes Polyol B2) und / oder C) mindestens ein weiteres von Diisocyanat C1) verschiedenes Diisocyanat C2) aufweist, und die Menge an Polyol B2) und an Diisocyanat C2) in Summe ≤ 10 Gew.-% ausmacht, bezogen auf die Gesamtmenge des Polyols B), des Diisocyanats C) und gegebenenfalls des Kettenregulators E1);

ii. Umsetzung des Polyols B) mit dem Diisocyanat C) in dem Lösungsmittel A) bei einer Temperatur von höchstens 150 °C und optional einem Druck von 0,5 bis 3,0 bar, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;
iii. Abtrennung von dem Lösungsmittel A) und optionale Waschung des thermoplastischen Polyurethans mit einem Lösungsmittel; und
iv. Trocknung des thermoplastischen Polyurethans zu dem thermoplastischen Polyurethan-Pulver;
wobei das thermoplastische Polyurethan-Pulver ein Massenmittel der Molmasse Mw von ≥ 45000 g/mol; einen Allophanatgehalt von ≤ 0,25 mol-%, bezogen auf das gesamte thermoplastische Polyurethan-Pulver; und ≥ 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von ≤ 4,0; aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.

EP 4 737 496 A1

## Beschreibung

Die vorliegende Erfindung betrifft ein Verfahren zur Herstellung eines thermoplastischen Polyurethan-Pulvers mittels Fällungspolymerisation, das durch dieses Verfahren erhaltene oder erhältliche thermoplastische Polyurethan-Pulver sowie dessen Verwendung. Darüber hinaus betrifft die Erfindung ein Formteil, erhalten oder erhältlich durch die Verarbeitung des erfindungsgemäßen thermoplastischen Polyurethan-Pulvers.

## Stand der Technik

Die Herstellung von Polymerpulvern ist für die Verwendung in Pulversinterverfahren, als Additiv für strukturierte Oberflächen oder als Schleif- und Schmiermittel in Kosmetikanwendungen und in der Industrie von hohem Interesse. Pulversinterverfahren sind insbesondere Verfahren, bei denen zunächst eine Pulverschicht appliziert wird, die in einem weiteren Schritt zusammengesintert bzw. die Pulverpartikel miteinander verschmolzen werden. Solche Verfahren werden z.B. zur Beschichtung von Metallen, Polymeren, Holz, Fasern und anderen Materialien genutzt, wo die Oberfläche mittels Dipping in Wirbelbett, mittels Spray-Gun oder via einer Dispersion mit Pulver imprägniert und anschließend erhitzt wird. Neben Epoxid- und Polyesterharzen werden dafür auch unterschiedlichste thermoplastische Polymere wie z.B. Polypropylen, Polyamide, PVC, Acrylate und Polyurethane benutzt.

Ein Prozess zur Herstellung von thermoplastischen Polyurethanen ("TPU") wurde bereits 1937 in DE728981C beschrieben. Die TPU, unter denen insbesondere ein HDI-BDO Addukt (HDI = 1,6-Hexamethylendiisocyanat; BDO = 1,4-Butandiol) auf Grund seiner Kombination guter Eigenschaften wie hoher Schmelzpunkt, hoher E-Modul und gute Chemikalienbeständigkeit später unter den Namen Perlon U, Igamid U und Durethan U eine Zeit lang vermarktet wurde (O. Bayer Angew. Chem. 1947, 59, 9, 257-288), werden dabei durch Umsetzung in einem Lösungsmittel (wie z.B. Chlorbenzol und Dioxan) hergestellt. Das Lösemittel wird in der Regel im Vakuum entfernt. In einigen Beispielen fielen die TPU auch als Gel oder Pulver aus. Es hat sich jedoch später gezeigt, dass die erreichten molekularen Kettenlängen zum Teil ungenügend waren, um gute Polymereigenschaften zu erhalten. Höhermolekulare TPU-Pulver auf Basis z.B. BDO-HDI sind so daher nicht zugänglich.

Jedoch werden die meisten Polymere wie Polypropylen, Polyamid oder thermoplastische Polyurethane, die z.B. für Pulverbeschichtungen oder Pulversinterverfahren verwendet werden können, in Form einer Schmelze hergestellt. Das so erhaltene Polymer muss in einem weiteren Prozessschritt, z.B. durch Mahlung, in die Pulverform gebracht werden. Bei der Herstellung von beispielsweise aliphatischen thermoplastischen Polyurethanen in der Schmelze werden die reinen Monomere wie zum Beispiel 1,4-Butandiol (BDO) und 1,6-Hexamethylendiisocyanat (HDI) in einem Kessel zu einem OH-terminierten Prepolymer umgesetzt. Die zweite Stufe der Umsetzung wird dann in einem schweren Mischaggregat (heavy duty mixer) durch Zugabe von HDI (im Unterschuss; Kennzahl KZ ca. 0,98) zu dem Prepolymer zum Endprodukt durchgeführt (B.I.O.S. Final Report No. 1472, ITEM No. 22, pp47-48). Die Nachteile des Prozesses liegen unter anderem in der hohen Reaktionstemperatur und dem langen sowie schlechten Mischprozess, was zu einem Anwachsen unerwünschter Nebenreaktionen führt. Dieser Schmelzeprozess kann auch in abgewandelter Form erfolgen. Dabei werden die Monomere BDO und HDI in einem Loop Reaktor beziehungsweise alternativ in statischen Mischern (Fluitec Reaktoren) zum Prepolymer umgesetzt, welches in einem 2. Reaktionsschritt in einer Reaktivextrusion mit HDI zum finalen Polymer weiterreagiert. Die Nachteile eines relativ hohen Allophanatanteils und das Auftreten von Gelpartikeln können allerdings auch bei einer Begrenzung des Umsatzes (Unterschuß HDI, KZ 0,98) nicht vermieden werden (WO2021122279). Bei den hier als Beispiel beschriebenen Schmelzeprozessen fällt das Polymer in Form eines Granulates nach der Reaktivextrusion an und muss in einem weiteren Prozessschritt noch in die Pulverform überführt werden.

Bei den meisten Polymeren wie Polyamiden (beispielsweise in EP3491066A1 gezeigt), Polypropylen und den ebenfalls häufig genutzten thermoplastischen Polyurethanen (siehe EP3512687B1) wird für die Umarbeitung des Granulates zu einem Pulver die Mahlung, insbesondere die Kryomahlung, verwendet. Bei der Kryomahlung wird das Polymergranulat mit flüssigem Stickstoff stark abgekühlt und anschließend gemahlen. Die gewünschte Korngröße wird durch Siebung aus dem Mahlgut abgetrennt. Der Nachteil von Mahlverfahren generell ist, dass die Partikelform nicht sphärisch, sondern sehr unregelmäßig und kantig ist. Dadurch wird das Fließverhalten negativ beeinflusst und die Siebung des Mahlgutes ist aufwendiger. Zudem ist die Partikelgrößenverteilung bei der Mahlung sehr breit, so dass die Ausbeute klein ist beziehungsweise der Mahl- und Siebvorgang mehrfach wiederholt werden muss. Zudem ist die Kryomahlung auf Grund des Einsatzes von flüssigen Stickstoff zur ausreichenden Kühlung der Polymere ein teures Verfahren.

Ein Sonderfall stellt das Polyamid 12 (beziehungsweise Polyamid 11) dar, welches zunächst als PA 12 Granulat hergestellt und unter Druck in Ethanol bei erhöhter Temperatur aufgelöst und anschließend unter sehr exakt kontrollierten Bedingungen wieder ausgefällt und getrocknet (siehe beispielsweise EP0911142B1) wird. Der Vorteil dieser Methode ist, dass das Polymerpulver als relativ sphärische Partikel anfällt, die zudem eine Partikelgröße von < 100 $\mu$m (rieselfähig) aufweisen und nicht klassiert (gesiebt) werden müssen. Nachteile des Verfahrens sind neben zusätzlichen Arbeitsschritten und Anlagen die damit verbundenen Kosten sowie keine oder nur eine begrenzte Additivierung des Polymers.

Die vorgenannten Verfahren sind auf Grund ihres Aufwandes teuer und/oder ihrer Nachteile für die Herstellung von thermoplastischen Polyurethan-Pulvern mit langen Kettenlängen in Kombination mit geringen Allophanatgehalt nicht geeignet und limitieren daher den Einsatz von thermoplastischen Polyurethan-Pulvern beziehungsweise die darauf angewiesenen Verfahren (Pulversinterprozesse; Füllstoff für Oberflächenstrukturierung) in der Industrie.

Es besteht daher ein Bedarf an einem Verfahren zur Herstellung von thermoplastischen Polyurethan-Pulvern mit hohen Molmassen und möglichst ähnlichen oder verbesserten physikalisch-chemischen Materialeigenschaften und mechanischen Eigenschaften der daraus erhaltenen oder erhältlichen Formteile.

## Aufgabe der Erfindung

Die Aufgabe der vorliegenden Erfindung bestand demnach in der Bereitstellung eines Verfahrens zur Herstellung von thermoplastischen Polyurethan-Pulvern mit hohen Molmassen und weiterhin möglichst guten oder verbesserten physikalischen-chemischen Materialeigenschaften. Im Besonderen sollte das Verfahren zu thermoplastischen Polyurethan-Pulvern mit einem Massenmittel der Molmasse von ≥ 45000 g/mol, einem Allophanatgehalt von ≤ 0,25 mol-%, bezogen auf das gesamte thermoplastische Polyurethan-Pulver, und ≥ 25,0 Gew.-% einer Partikelfraktion von < 0,500 mm, bezogen auf das gesamte thermoplastische Polyurethan-Pulver und/oder einem Verhältnis von Zentrifugenmittel der Molmasse Mz zu Massenmittel der Molmasse Mw von ≤ 4,0 führen. Außerdem sollte das Verfahren möglichst einfach, kostengünstig und/oder resourcenschonend sein. Schließlich sollten die thermoplastischen Polyurethan-Pulver durch Weiterverarbeitung zu Formteilen führen, welche möglichst weiterhin gute oder verbesserte mechanische Eigenschaften, insbesondere eine gute Bruchdehnung und ein gutes E-Modul, aufweisen.

## Lösung der Aufgabe und detaillierte Beschreibung der Erfindung

Die Aufgabe wurde gelöst durch ein Verfahren zur Herstellung eines thermoplastischen Polyurethan-Pulvers mittels Fällungspolymerisation, umfassend die Schritte:

i. Bereitstellung

A) eines Lösungsmittels;
B) wenigstens eines Polyols B1) mit einer Molmasse von 60 g/mol bis 250 g/ mol;
C) wenigstens eines Diisocyanats C1);
D) optional eines Katalysators;
E) optional eines Kettenregulators E1) und/oder eines Additivs E2);

wobei zusätzlich

B) mindestens ein weiteres von Polyol B1) verschiedenes Polyol B2)
und / oder

C) mindestens ein weiteres von Diisocyanat C1) verschiedenes Diisocyanat C2)

aufweist, und
die Menge an Polyol B2) und an Diisocyanat C2) in Summe ≤ 10 Gew.-% ausmacht, bezogen auf die Gesamtmenge des Polyols B), des Diisocyanats C) und gegebenenfalls des Kettenregulators E1);
ii. Umsetzung des Polyols B) mit dem Diisocyanat C) in dem Lösungsmittel A) bei einer Temperatur von höchstens 150 °C, vorzugsweise bei Erhitzen des Lösungsmittel A) unter Rückfluss und optional einem Druck von 0,5 bis 3,0 bar, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittel A) - bevorzugt während der Umsetzung - ausfällt und eine Dispersion bildet;
iii. Abtrennung von dem Lösungsmittel A) und optionale Waschung des thermoplastischen Polyurethans mit einem Lösungsmittel; und
iv. Trocknung des thermoplastischen Polyurethans zu dem thermoplastischen Polyurethan-Pulver;
wobei das thermoplastische Polyurethan-Pulver

- ein Massenmittel der Molmasse Mw von ≥ 45000 g/mol;
- einen Allophanatgehalt von ≤ 0,25 mol-%, bezogen auf das gesamte thermoplastische Polyurethan-Pulver; und
- ≥ 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.

Im Zuge der Entwicklungsarbeiten, die zu der vorliegenden Erfindung geführt haben, wurde überraschenderweise festgestellt, dass die Molmassen von thermoplastischen Polyurethan-Pulvern bei einer Fällungspolymerisation, welche ein Polyol B1) mit einer Molmasse von 60 g/mol bis 250 g/ mol und ein Diisocyanat C1) verwenden, erhöht werden können, wenn zusätzlich mindestens ein weiteres von Polyol B1) verschiedenes Polyol B2) und/oder mindestens ein weiteres von Diisocyanat C1) verschiedenes Diisocyanat C2) eingesetzt wird und die Menge an Polyol B2) und an Diisocyanat C2) in Summe ≤ 10 Gew.-% ausmacht, bezogen auf die Gesamtmenge des Polyols B), des Diisocyanats C) und gegebenenfalls des Kettenregulators E1). Die durch das erfindungsgemäße Verfahren erhaltenen oder erhältlichen thermoplastischen Polyurethan-Pulver haben zudem zumindest ähnliche physikalisch-chemische Materialeigenschaften, wie z.B. das Zentrifugenmittel der Molmasse Mz zu Massenmittel der Molmasse Mw und der Allophanatgehalt, wie die thermoplastischen Polyurethan-Pulver, welche ohne den Zusatz von einem Polyol B2) und/oder Diisocyanat C2) hergestellt wurden. Weiterhin wiesen die aus den erfindungsgemäßen thermoplastischen Polyurethan-Pulvern erhaltenen Produkte wie beispielsweise Formteile weiterhin gute mechanische Eigenschaften, insbesondere ein gutes Zugmodul und/oder Bruchdehnung, auf.

Außerdem ist es bei dem erfindungsgemäßen Verfahren möglich weiterhin Lösungsmittel wie insbesondere Chlorbenzol einzusetzen, welche recyclebar und damit resourcenschonend sind sowie während der Isolierung und Aufarbeitung des thermoplastischen Polyurethan-Pulvers nicht zu Abbauprodukten führen. So wurde gefunden, dass Lösungsmittelgemische mit DMSO als Lösungsmittelbestandteil zwar zu guten Fällungspolymerisationen führen, allerdings kommt es während der Isolierung und Aufarbeitung zu Abbauprodukten des DMSO, welche bereits in geringsten Konzentrationen zu einer intensiven Geruchsbelästigung führen. Zudem erfordert die destillative Trennung eines Lösungsmittelgemisches einen höheren apparativen Aufwand, der die Kosten für den Rezyklierschritt erhöht.

Das Zahlenmittel der Molmasse (Mn), das Massenmittel der Molmasse (Mw) sowie das Zentrifugenmittel (Mz) des thermoplastischen Polyurethanpulvers wird mittels Gelpermeationschromatographie (GPC) bestimmt. Dazu wird die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wird mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7μm, 300 Å PSS PFG 7μm, 100 Å PSS PFG 7μm in dieser Reihenfolge (PSS Polymer Standards Service GmbH) |
| Entgasung: | Degasser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

Das Zahlenmittel der Molmasse (Mn bzw. $\overline{M_n}$) wird aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \text{ in g/mol}$$

wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i*, in mol ist.

Das Massenmittel der Molmasse (Mw bzw. $\overline{M_w}$) wird ebenfalls aus den durch die Messung der Gelpermeationschromatographie erhaltenen Daten mit Hilfe der folgenden Gleichung errechnet:

$$\overline{M}_w = \frac{\sum_i n_i {M_i}^2}{\sum_i n_i M_i} \text{ in g/mol}$$

wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i*, in mol ist.

Das Zentrifugenmittel der Molmasse (Mz bzw. $\overline{M}_z$ ) wird aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \quad \text{in g/mol}$$

wobei:

$M_i$ die molare Masse der Polymere der Fraktion *i* ist, so dass $M_i < M_{i+1}$ für alle *i*, in g/mol ist,
$n_i$ die Stoffmenge des Polymers der Fraktion *i*, in mol ist.

Der Allophanatgehalt des thermoplastischen Polyurethanpulvers wird mittels $^1$H-NMR bestimmt. Die Messung wird mit einem Bruker AV III HD 600 Spektrometer bei 600 MHz in DMSO-D6 bei 80 °C durchgeführt. Folgende Peaks werden dabei ausgewertet:

| | | | |
|---|---|---|---|
| U= | C**H**$_2$-NH | 2.98 ppm | $CH_2$ bei Urethan |
| O= | C**H**$_2$-OH | 3.43 ppm | $CH_2$ bei OH-Gruppen |
| N= | N-**H** | 6.6 ppm | Urethan |
| A= | N-**H** | 8.3-8.4 ppm | Allophanat |

Die Allophanat Konzentration beziehungsweise der Allophanatgehalt in mol-% wird dabei nach folgender Formel berechnet:

$$\text{Allophanat [mol-\%]} = 100\ \% * A / (A+N)$$

Die Kennzahl für den Umsatz ergibt sich aus der Formel:

$$KZ = 1/\ (1+O/U)$$

Für die Bestimmung der Partikelfraktion wird ca. 100 g Probenmenge 5 min mit einer Haver & Boecker Laborsiebmaschine Nr. 7279 (Bj. 1978) und dem entsprechenden Siebsatz (z.B. 0,100 mm, 0,250 mm, 0,500 mm) gesiebt und die einzelnen Fraktionen danach gewogen.

Die Zugprüfung (zur Bestimmung der Streckspannung, der Streckdehnung, der Bruchdehnung und des E-Moduls/Zugmoduls) wird im Rahmen der Erfindung in Anlehnung an die Prüfmethode DIN EN ISO 527 mit Probekörpern Typ 5A (DIN EN ISO 527-2, Dicke 2 mm) durchgeführt. Die Probekörper werden vor dem Versuch mindestens 24 h bei Normbedingungen gelagert. Die Zugversuche erfolgen bei 22 °C und 50 % relativer Feuchte, durchgeführt mit einer Universalprüfmaschine Z010 der Fa. Zwick mit einer Geschwindigkeit von 10 mm/ min. Der E-Modul (bzw. das Zugmodul) wird zwischen 0,05 % und 0,25 % Dehnung ermittelt mittels Sekante.

Die Probekörper können bspw. dadurch hergestellt werden, dass das thermoplastische Polyurethan-Pulver bei 80 °C im Trockenschrank für 4 h getrocknet, anschließend auf einem Mikroextruder (beispielsweise MC 15 HT (15 mL) der Firma Xplore) verarbeitet und mit dem dazugehörigen Spritzgußteil (beispielsweise ein Micro moulder IM 12) in die benötigte Form gebracht wird.

Es ist bevorzugt, dass das Lösungsmittel A) halogenierte Aromaten, Aromaten, Ketone, Ether, Ester und Carbonate oder Mischungen davon, insbesondere Chlorbenzol und/oder ortho-Dichlorbenzol; Benzol; Toluol; Ethylbenzol; Cumol; Xylol; Cyclopentanon; Cyclohexanon; Heptan-4-on; Butylacetat; Amylacetat; Methoxypropylacetat oder Mischungen davon, weiter bevorzugt Chlorbenzol umfasst oder daraus besteht.

Die Komponente B) bzw. das Polyol B) umfasst oder besteht aus wenigstens einem Polyol B1) mit einer Molmasse von 60 g/mol bis 250 g/mol und gegebenenfalls mindestens einem weiteren von Polyol B1) verschiedenen Polyol B2), bevorzugt mit einer Molmasse von 60 g/mol bis 250 g/ mol. Das Polyol B1) kann aus der Gruppe ausgewählt sein, umfassend oder bestehend aus Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen von diesen und/oder das Polyol B2) kann

aus der Gruppe ausgewählt sein, umfassend oder bestehend aus Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol, Polyesterdiole, Polyetherdiole oder Mischungen von diesen. Es ist jedoch bevorzugt, dass das Polyol B1) und das Polyol B2) jeweils ausgewählt sind aus der Gruppe, umfassend oder bestehend aus Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen von diesen. Weiter bevorzugt ist es, dass das Polyol B1) 1,4-Butandiol umfasst oder daraus besteht und/oder das Polyol B2) 1,3-Propandiol, 1,6-Hexandiol, Neopentylglycol oder 1,10-Decandiol umfasst oder daraus besteht.

Die Komponente C) bzw. das Diisocyanat C) umfasst oder besteht aus wenigstens einem Diisocyanat C1) und gegebenenfalls mindestens einem weiteren von Diisocyanat C1) verschiedenen Diisocyanat C2). Das Diisocyanat C1) und das Diisocyanat C2) sind bevorzugt jeweils ausgewählt aus der Gruppe, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat, 4,4'-Methylendiphenylisocyanat oder Mischungen von diesen, wobei weiter bevorzugt das Diisocyanat C1) 1,6-Hexandiisocyanat umfasst oder daraus besteht und/oder das Diisocyanat C2) 1,5-Pentandiisocyanat, Isophorondiisocyanat, 1,1'-Methylenbis(4-isocyanatocyclohexan oder 4,4'-Methylendiphenylisocyanat umfasst oder daraus besteht.

Die Menge an Polyol B2) und an Diisocyanat C2) macht in Summe bevorzugt von 1,0 bis 8,0 Gew.-% aus, weiter bevorzugt 1,5 bis 6,0 Gew.-%, bezogen auf die Gesamtmenge der Komponenten B), C) und gegebenenfalls E1).

Ferner ist es bevorzugt, dass

- das Polyol B1) in einer Menge von 15,0 bis 65,0 Gew.-%, weiter bevorzugt 25,0 bis 40,0 Gew.-%, und/oder

- das Diisocyanat C1) in einer Menge von 35,0 bis 85,0 Gew-%, weiter bevorzugt 60,0 bis 75,0 Gew.-%,

eingesetzt werden, jeweils bezogen auf die Gesamtmenge der Komponenten B), C) und gegebenenfalls E1).

Der optionale Katalysator D) kann beispielsweise aus typischen Urethanisierungskatalysatoren wie sie beispielweise in Becker / Braun, Kunststoffhandbuch Band 7, Polyurethane, Kapitel 3.4 angegeben werden oder Mischungen davon ausgewählt sein.

Der optionale Kettenregulator E1) kann beispielsweise aus der Gruppe, umfassend oder bestehend aus monofunktionalen Zerewitinow H-aciden Verbindungen, monofunktionalen Isocyanaten oder Mischungen davon ausgewählt sein. Als Beispiele für den optionalen Kettenregulator E1) sind unter anderem n-Octanol, Benzylalkohol, n-Oktylamin, Dioktylamin, □-Caprolactam, Propanonoxim, Butan-1-thiol, Acetylaceton und Malonsäurediethylester zu nennen.

Das optionale Additiv E2) kann zum Beispiel aus der Gruppe ausgewählt sein, umfassend oder bestehend aus Stabilisatoren, Farbstoffen und Markern oder Mischungen davon.

Unter Farbstoffen werden hier organische Verbindungen verstanden, die mindestens Teile des sichtbaren Lichtes zwischen 380 nm und 790 nm absorbieren. Besonders bevorzugt sind Farbstoffe, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Unter Markern werden hier Verbindungen verstanden, die mit Hilfe von analytischen Verfahren einfach zu detektieren und spezifisch sind. Dies können zum Beispiel aromatische Verbindungen sein, welche eine spezifische UV-Absorption oder UV-Absorptionsmuster aufweisen, oder mittels Fluoreszenzspektroskopie nachgewiesen werden können. Weitere Beispiele für Marker sind Isotopen-angereicherte Verbindungen, die sich gut mittels NMR-Spektroskopie oder durch ihre radioaktive Strahlung nachweisen lassen. Besonders bevorzugt sind Marker, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Des Weiteren ist es bevorzugt, dass

- 30,0 bis 95,0 Gewichtsteile, bevorzugt 60,0 bis 90,0 Gewichtsteile des Lösungsmittels A);
- 2,0 bis 40,0 Gewichtsteile, bevorzugt 3,0 bis 20,0 Gewichtsteile des Polyols B);
- 3,0 bis 40,0 Gewichtsteile, bevorzugt 5,0 bis 25,0 Gewichtsteile des Diisocyanats C);
- 0 bis 5,0 Gewichtsteile, bevorzugt 0 bis 0,1 Gewichtsteile des Katalysators D);
- 0 bis 10,0 Gewichtsteile, bevorzugt 0,001 bis 1,5 Gewichtsteile des Kettenregulators E1);
- 0 bis 20,0 Gewichtsteile, bevorzugt 0,0001 bis 3,0 Gewichtsteile des Additivs E2);

bereitgestellt werden, jeweils bezogen auf die Gesamtmenge von Lösungsmittel A), Polyol B), Diisocyanat C), Katalysator D), Kettenregulator E1) und Additiv E2), welche auf 100 Gewichtsteile normiert ist.

Die Umsetzung in Schritt ii. erfolgt vorzugsweise bei einer Temperatur von 100 °C bis 150 °C, bevorzugt von 120 °C bis 145 °C, weiter bevorzugt von 130 °C bis 140 °C und/oder bei einer Isocyanat-Kennzahl von 0,95 bis 1,1, weiter

bevorzugt 0,97 bis 1,02, noch weiter bevorzugt 0,98 bis 1,0. Vorzugsweise erfolgt die Umsetzung in Schritt ii. dabei durch Erhitzen des Lösungsmittels A) unter Rückfluss. Außerdem erfolgt die Umsetzung in Schritt ii. bevorzugt bei einem Druck von 0,5 bis 3,0 bar, weiter bevorzugt von 0,75 bis 2,0 bar, noch weiter bevorzugt von 1,0 bis 1,5 bar. So wurde gefunden, dass wenn die Umsetzung in Schritt ii. bei den vorgenannten Drücken erfolgt, die Molmasse Mw des thermoplastischen Polyurethan-Pulvers bei Verwendung desselben Lösungsmittel weiter gesteigert werden kann. Ohne an eine Theorie gebunden zu sein, kann durch einen solchen Druck nämlich die Siedetemperatur des Lösungsmittels A) geregelt und beispielsweise eine Temperaturerhöhung während der Umsetzung in Schritt ii. ermöglicht werden, d.h. dass dadurch beispielsweise das Erhitzen des Lösungsmittels A) unter Rückfluss bei höheren Temperaturen ermöglicht werden kann. Zum Beispiel kann bei Verwendung von Chlorbenzol als Lösungsmittel, welches einen Siedepunkt von 132 °C bei Atmosphärendruck aufweist, durch die Verwendung eines Drucks von ca. 1,2 bar bei einer Temperatur von ca. 138 °C unter Rückfluss erhitzt werden, also einer höheren Temperatur. Durch diese Druckanpassung und ein Erhitzen unter Rückfluss bei nun höheren Temperaturen wird nochmal eine weitere Erhöhung der Molmasse Mw des thermoplastischen Polyurethan-Pulvers erzielt. Zudem wurde gefunden, dass durch das Arbeiten am Rückfluß die Temperatur der Reaktionslösung trotz Auftreten sehr starker Exothermie während der Reaktion selber als auch während des Fällungsvorganges besser kontrolliert und die Reproduzierbarkeit der Molmassen verbessert werden kann. Vorzugsweise erfolgt die Umsetzung in Schritt ii. daher bevorzugt bei einem Druck von 0,5 bis 3,0 bar, weiter bevorzugt von 0,75 bis 2,0 bar, noch weiter bevorzugt von 1,0 bis 1,5 bar, wobei der Druck derart gewählt wird, dass dadurch der Siedepunkt des Lösungsmittels A) eingestellt wird, bevorzugt auf eine Temperatur von höchstens 150 °C, weiter bevorzugt von 100 °C bis 150 °C, noch weiter bevorzugt von 120 °C bis 145 °C, besonders bevorzugt von 130 °C bis 140 °C. Der Siedepunkt sollte in diesem Fall höchstens auf 150 °C erhöht werden, damit die Umsetzung des Polyols B) mit dem Diisocyanat C) in dem Lösungsmittel A) unter Rückfluss erfolgen kann und gleichzeitig eine Temperatur von höchstens 150 °C nicht überschritten wird.

Die in dem Schritt ii. gebildete Dispersion weist vorzugsweise einen Feststoffgehalt von 5,0 bis 50,0 Gew.-% auf, weiter bevorzugt von 15,0 bis 45,0 Gew.-%, noch weiter bevorzugt von 20,0 bis 40,0 Gew.-%, bestimmt mittels gravimetrischer Messung mit und ohne Lösungsmittel. Es ist bevorzugt, dass der Feststoff während der Umsetzung in Schritt ii., sprich während der Reaktion, ausfällt.

Die Isocyanat-Kennzahl errechnet sich aus der Molmenge der reaktiven Isocyanatgruppen geteilt durch die Molmenge der reaktiven Zerewitinow H-aciden Gruppen.

$$KZ = n_{Iso} / n_{H\text{-}acid}$$

Darüber hinaus ist bevorzugt, dass die Abtrennung in Schritt iii. mittels Filtration, Zentrifugation und/oder Abdampfen der Lösungsmittel erfolgt. Das thermoplastische Polyurethan kann in Schritt iii. auch noch zusätzlich mit einem Lösungsmittel gewaschen werden (optionale Waschung). Vorzugsweise umfasst oder besteht dieses Lösungsmittel aus einem Lösungsmittel mit einem Siedepunkt zwischen -30 °C und +250 °C (bei 1 bar), bevorzugt halogenierte Aromaten, Aromaten und Alkane, Ketone, Ether, Ester, Alkohole, Nitrile, Wasser und Carbonate oder Mischungen davon, insbesondere Chlorbenzol, Methylethylketon, Aceton, einem C1-C6-Alkohol und deren Ester, Dimethylcarbonat, Diethylcarbonat Mischungen davon, besonders bevorzugt Chlorbenzol.

Die Trocknung in Schritt iv. erfolgt ferner vorzugsweise mit Bewegung beziehungsweise Durchmischung des Trockenmaterials, besonders bevorzugt in einem Schaufeltrockner.

Es ist außerdem bevorzugt, dass das thermoplastische Polyurethan-Pulver

- ein Massenmittel der Molmasse Mw von 50000 bis 300000 g/mol, bevorzugt von 55000 bis 150000 g/mol, besonders bevorzugt von 60000 bis 120000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100,0 Gew.-%, weiter bevorzugt von 40,0 bis 80,0 Gew.-% einer Partikelfraktion von $< 0,500$ mm, bezogen auf das gesamte thermoplastischen Polyurethan-Pulver und/oder ein Verhältnis von Zentrifugenmittel der Molmasse Mz zu Massenmittel der Molmasse Mw von $\leq 3,0$, bevorzugt von 1,5 bis 2,2

aufweist.

Je nach Auswahl des Pulversinterverfahrens und Anwendungsspezifikationen für das Polyurethanpulver kommen Pulver mit verschiedenen Korngrößen zur Anwendung, jedoch bewegen sich die Korngrößen meist in einem Bereich bis zu 0,500 mm und kleiner.

Ein weiterer wichtiger Aspekt der Korngröße ist die Bildung einer möglichst stabilen Dispersion während der Reaktion und zur Verarbeitung derselben. Nach der Überführung in den industriellen Maßstab muss die Dispersion mittels

Pumpen transportiert werden, darf nicht vorzeitig sedimentieren und sollte zudem gute Filtrationseigenschaften aufweisen. Bei zu großer Korngröße sedimentieren die Partikel zu schnell, es kommt zu Ablagerungen und erhöhtem Verschleiß an den Pumpen.

Das thermoplastische Polyurethan nach Schritt iii. und/oder das thermoplastische Polyurethan-Pulver nach Schritt iv. kann/können ferner mit einem Stabilisator aus einer Stabilisatorlösung imprägniert werden. Dafür wird vorzugsweise das thermoplastische Polyurethan nach Schritt iii. und/oder das thermoplastische Polyurethan-Pulver nach Schritt iv. in der Stabilisatorlösung dispergiert und anschließend abgetrennt sowie getrocknet. Die Stabilisatorlösung umfasst vorzugsweise oder besteht vorzugsweise aus

- einem Lösungsmittel, welches aus der Gruppe ausgewählt ist, umfassend oder bestehend aus Lösungsmitteln der Gruppe chlorierte Aromaten; Aromaten; Aliphaten; Ester; Ether; Alkohole; Wasser; Ketone; Nitrile; Carbonate; oder Mischungen davon, oder bevorzugt dem Lösungsmittel A) aus Schritt i. entspricht, wobei das Lösungsmittel vorzugsweise einen Siedepunkt von < 250 °C bei 1 bar aufweist; und
- einem darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate (allgemein auch Phosphor-basierte Stabilisatoren genannt), schwefelhaltige Antioxidantien, 2,2,6,6-Tetramethylpiperidin-Derivate, Benzotriazol-Derivate, Triazin-Derivate, Hydroxybenzophenon-Derivate, Cyanoacrylat-Derivate, Oxalinid-Derivate oder Mischungen davon;

wobei der Gewichtsanteil des Stabilisators bevorzugt von 0,001 bis 10,0 Gew.-%, weiter bevorzugt von 0,05 bis 5,0 Gew.-% beträgt, bezogen auf das Gesamtgewicht der Stabilisatorlösung.

Bevorzugt enthält die Stabilisatorlösung als Phosphor-basierte Stabilisatoren Phosphor(III) Verbindungen, die in der Wärme bei Anwesenheit von Sauerstoff zu Phosphor (V) Verbindungen oxidiert werden. Weiter bevorzugt werden organische Phosphite, Phosphin-Verbindungen und Phosphonate, insbesondere organische Phosphite und Phosphonate, eingesetzt.

Besonders bevorzugt ist der Phosphor-basierte Stabilisator ausgewählt aus mindestens einer Verbindung gemäß den Strukturen (1), (2), (3), (4), (5) und (6).

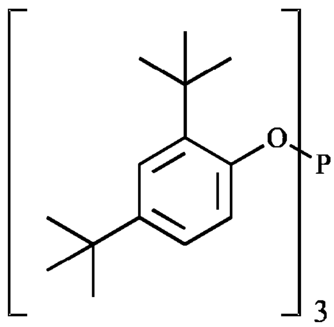

(1)

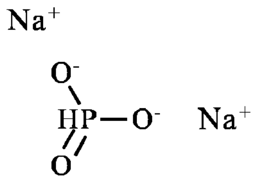

(2)

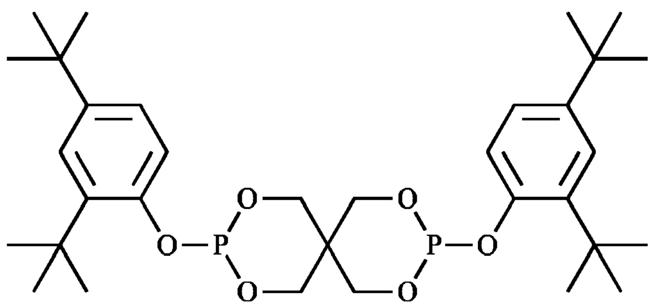

(3)

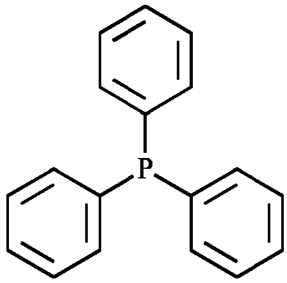

(4)

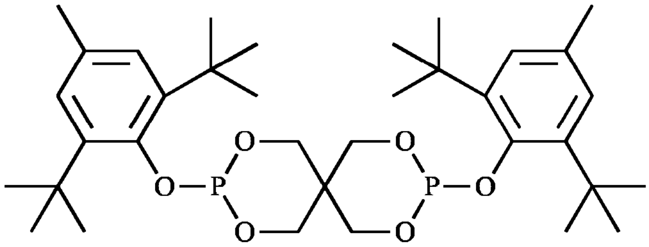

(5)

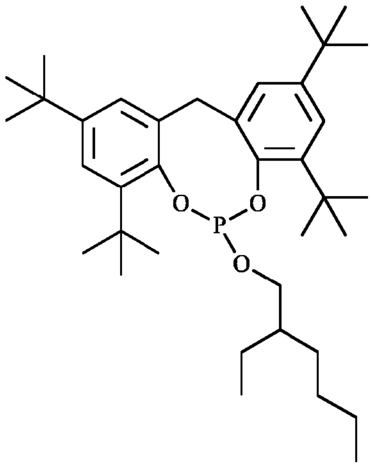

(6)

Die Verbindung (1) ist als CAS: 31570-04-4 klassifiziert und kommerziell unter dem Namen Irgafos™ 168 der Firma BASF (Deutschland) verfügbar.

Die Verbindung (2) ist als CAS: 237-249-1 klassifiziert und kommerziell unter dem Namen Brüggolen™ H10 der Firma Brüggeman (Deutschland) verfügbar.

Die Verbindung (3) ist als CAS: 26741-53-7 klassifiziert und kommerziell unter dem Namen Irgafos™ 126 der Firma BASF (Deutschland) verfügbar.

Die Verbindung (4) ist als CAS: 603-35-0 klassifiziert und kommerziell unter dem Namen Triphenylphosphin der Firma BASF (Deutschland) verfügbar.

Die Verbindung (5) ist als CAS: 80693-00-1 klassifiziert und kommerziell unter dem Namen ADK Stab™ PEP 36 der Firma Adeka (Japan) verfügbar.

Die Verbindung (6) ist als CAS: 126050-54-2 klassifiziert und kommerziell unter dem Namen ADK Stab™ HP-10 der Firma Adeka (Japan) verfügbar.

Ein weiterer geeigneter Phosphor(III) enthaltener Stabilisator ist AddWorks™ LXR 568 MP der Firma Clariant (Schweiz).

Es ist bevorzugt, dass der Phosphor-basierte Stabilisator aus der Gruppe ausgewählt ist, umfassend oder bestehend aus Verbindungen gemäß den Strukturen (1), (2), (4), (6) oder Mischungen von diesen. Besonders bevorzugt wird als Phosphor-basierter Stabilisator die Verbindung gemäß Struktur (1) und/oder (2) eingesetzt. Durch diese Phosphor-basierten Stabilisatoren wird eine besonders hohe Zugfestigkeit des hergestellten Formkörpers erreicht.

Die Stabilisatorlösung kann außerdem ein sterisch gehindertes Phenol enthalten. Auch Mischungen mehrerer solcher Komponenten und verschiedener Stabilisatoren können eingesetzt werden.

Bevorzugt handelt es sich bei dem sterisch gehinderten Phenol um eine Verbindung der allgemeinen Struktur (7a) oder (7b)

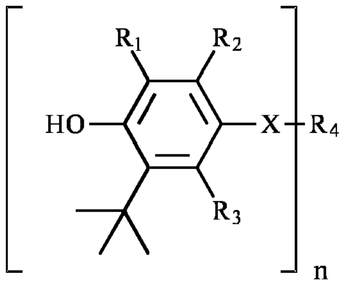

(7a)

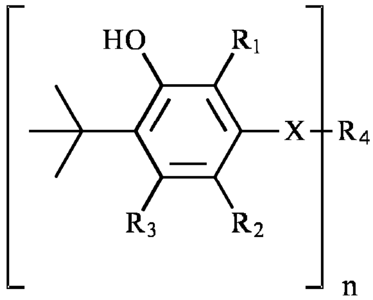

(7b)

wobei n 1, 2, 3 oder 4 bedeutet,

$R_1$, $R_2$ und $R_3$ jeweils unabhängig voneinander für $C_1$- bis $C_4$-Alkyl oder Wasserstoff stehen
X für eine direkte Bindung oder einen organischen Rest mit $C_1$- bis $C_{60}$- steht und der organische Rest Sauerstoff und/oder Stickstoff enthalten kann.
$R_4$ für eine direkte Bindung, Kohlenstoff, $C_1$-$C_8$ Alkyl, Aryl oder eine Struktur gemäß Formel (8a) (8b) oder (8c) steht.

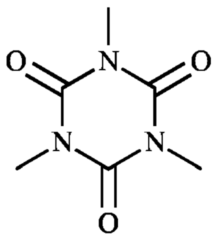

(8a)

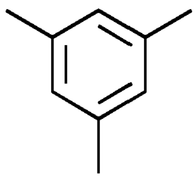

(8b)

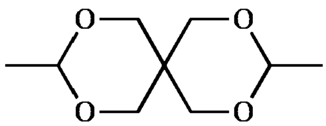

(8c)

Besonders bevorzugt ist das sterisch gehinderte Phenol ausgewählt aus mindestens einer Verbindung gemäß den Strukturen (9), (10), (11) und (12).

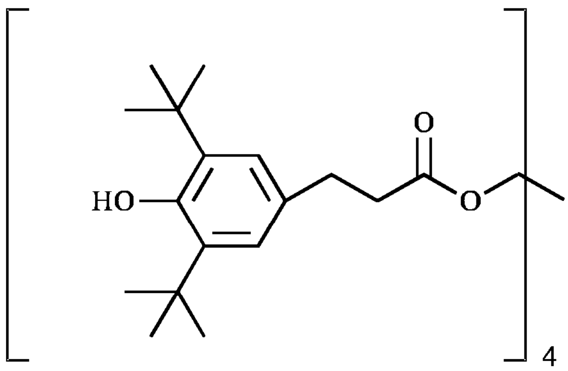

(9)

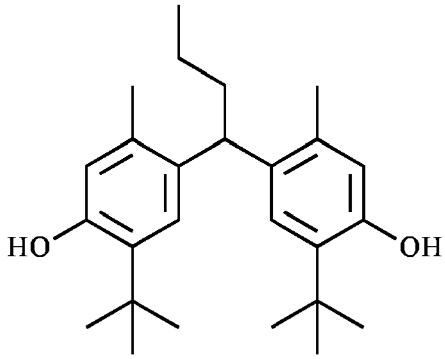

(10)

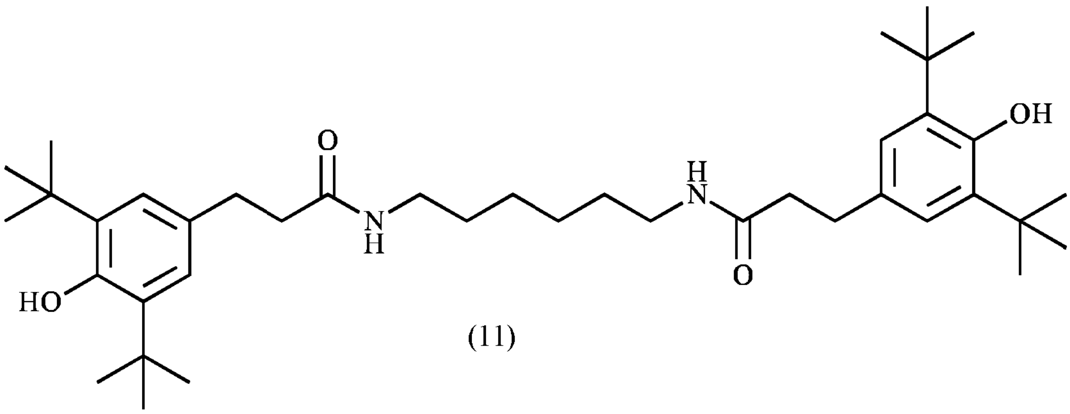

(11)

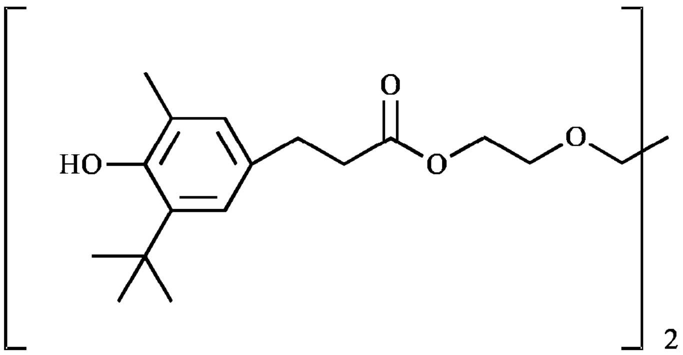

(12)

Die Verbindung (9) ist als CAS: 6683-19-8 klassifiziert und kommerziell unter dem Namen ADK Stab™ AO-60 der Firma Adeka (Japan) verfügbar.

Die Verbindung (10) ist als CAS: 85-60-9 klassifiziert und kommerziell unter dem Namen Songnox™ 4425 der Firma Songwon Industrial Group (Südkorea) verfügbar.

Die Verbindung (11) ist als CAS: 23128-74 klassifiziert und kommerziell unter dem Namen Songnox™ 1098 der Firma Songwon Industrial Group (Südkorea) verfügbar.

Die Verbindung (12) ist als CAS: 36443-68-2 klassifiziert und kommerziell unter dem Namen Irganox™ 245 der Firma BASF (Deutschland) verfügbar.

Weiterhin kann die Stabilisatorlösung optional ein schwefelhaltiges Antioxidanz enthalten. Auch Mischungen mehrerer solcher Komponenten können eingesetzt werden.

Ein schwefelhaltiges Antioxidanz kann beispielsweise eine Struktur gemäß $R_1$-$CH_2$-$(S)_x$-$CH_2$-$R_2$, aufweisen, wobei x = 1 oder 2 ist und wo $R_1$ und $R_2$ gleich oder verschieden sein können und aromatische oder aliphatische Gruppen darstellen. Bevorzugt handelt es sich bei $R_1$ und $R_2$ um aliphatische Gruppen, die linear oder verzweigt sein können und funktionelle Gruppen enthalten können.

Beispiele von kommerziell verfügbaren schwefelhaltigen Antioxidanzien sind Dilauryl-3,3'-thiodipropionat (CAS 123-28-4), Distearyl-3,3'-thiodipropionat (CAS 693-36-7), Ditridecylthiodipropionat (CAS 10595-72-9); Pentaerythritoltetrakis ([β-laurylthiopropionat (CAS 29598-76-3), 2,2'-Thiodiethylenbis[3-(3,5-di-t-butyl-4-hydroxyphenyl)propionat] (CAS 41484-35-9), Dimyristylthiodipropionat (CAS 16545-54-3) und Distearyldisulfid (CAS 2500-88-1) sowie Mischungen aus diesen Substanzen.

Alternativ kann das schwefelhaltiges Antioxidanz auch einen oder mehrere Diphenylthioester umfassen wie beispielsweise 4,4'-Thiobis(2-t-butyl-5-methlylphenol) (CAS 96-69-5) und 2,2'-Thiobis(6-t-butyl-4-methylphenol) (CAS 90-66-4).

Besonders bevorzugt als schwefelhaltiges Antioxidanz ist Pentaerythritoltetrakis ([β-laurylthiopropionat] (CAS 29598-76-3) (Struktur (13)).

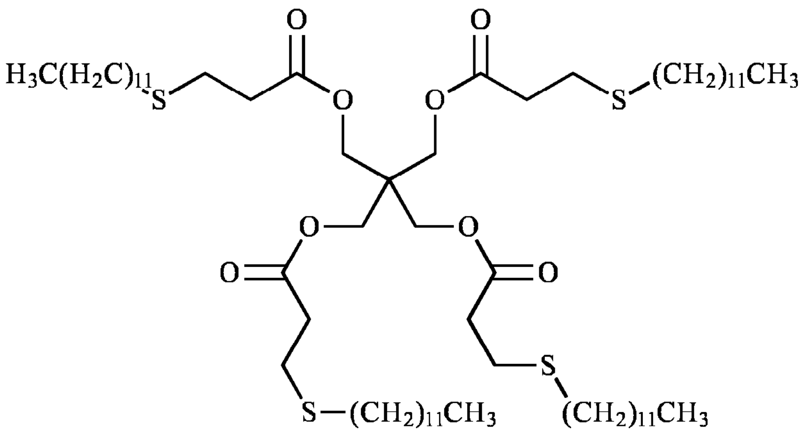

(13)

Ferner ist es bevorzugt, dass das thermoplastische Polyurethanpulver nach der vorgenannten Imprägnierung 0,005 bis 2,0 Gew.-% des Stabilisators aus der Stabilisatorlösung aufweist, bezogen auf das Gesamtgewicht des thermoplastischen Polyurethanpulvers.

Das nach der Imprägnierung erhaltene thermoplastische Polyurethan-Pulver weist bevorzugt einen b-Wert von ≤ 4,0, weiter bevorzugt von 0,1 bis 2,5 auf, bestimmt im CIE-Lab Farbraum mittels einem Spektralphotometer mit der Lichtart D 65 bei 8° gemäß DIN EN ISO 11664-4. Ferner ist es bevorzugt, dass das thermoplastische Polyurethan-Pulver eine Änderung des b-Werts (Δb) nach einer Temperatureinwirkung von 120 °C für eine Dauer von 96 h und/oder von 155 °C für eine Dauer von 6 h jeweils unter Luftatmosphäre von ≤ 3,5, bevorzugt von 0,1 bis 2,8, weiter bevorzugt von 0,2 bis 2,0 aufweist, wobei der b-Wert im CIE-Lab Farbraum mittels einem Spektralphotometer mit der Lichtart D 65 bei 8° gemäß DIN EN ISO 11664-4 bestimmt wird und sich die Änderung des b-Werts durch Subtraktion des b-Werts vor der Temperatureinwirkung von dem b-Wert nach der Temperatureinwirkung ergibt. Es wurde nämlich überraschenderweise gefunden, dass durch die vorgenannte erfindungsgemäße Imprägnierung eine Vergilbung des thermoplastischen Polyurethanpulvers, auch nach einer Temperatureinwirkung, verringert wird, welche ansonsten bei durch Lösungsmittelverfahren hergestellten thermoplastischen Polyurethanpulvern, insbesondere aliphatischen thermoplastischen Polyurethanpulvern, auf Grund des Trocknungsschrittes sehr ausgeprägt sein kann (German Plastics Practice, 1946, p 304). Der b-Wert im CIE-Lab Farbraum, wie vorstehend dargelegt, wird im Rahmen der Erfindung als ein Maß für die Vergilbung beziehungsweise den "Weißeindruck" des Polyurethanpulvers verwendet. Der CIE-Lab-Farbraum setzt sich aus dem L-, dem a- und dem vorgenannten b-Wert zusammen. Dabei definiert "L" die Helligkeit, "a" den Rot/Grün-Wert und "b" den Gelb/Blau-Wert. Zur Bestimmung des b-Werts wird eine Farbmessung von der jeweiligen Probe (ca 3 mm Pulverschicht zwischen 2 Deckgläsern für Mikroskopie) mithilfe eines portablen Spektralphotometers (CM5 der Firma Konica Minolta) mit der Lichtart D 65 bei 8° (Beobachter) sowie einer diffusen Beleuchtung gemäß DIN EN ISO 11664-4 durchgeführt. Die Farbe des Pulvers wird dabei in Reflexion gemessen und im CIE-Lab-Farbraum mit den L-, a- und b-Werten angegeben. Der b-Wert wird aus der gemessenen spektralen Reflexionskurve mit Hilfe der Gerätesoftware berechnet.

Ferner betrifft die Erfindung ein thermoplastisches Polyurethan-Pulver, erhalten oder erhältlich nach dem erfindungsgemäßen Verfahren. Wie bereits weiter oben dargelegt wurde, weisen diese thermoplastischen Polyurethan-Pulver eine hohes Massenmittel der Molmassen in Kombination mit weiterhin möglichst guten oder verbesserten physikalisch-chemischen Materialeigenschaften, insbesondere einem geringen Allophanatgehalt auf. Sind diese noch zusätzlich erfindungsgemäß imprägniert worden, zeigen diese zudem eine geringere Vergilbung nach Temperatureinwirkung.

Außerdem betrifft die Erfindung die Verwendung des erfindungsgemäßen thermoplastischen Polyurethan-Pulvers in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Darüber hinaus betrifft die Erfindung ein Formteil, erhalten oder erhältlich durch die Verarbeitung des erfindungsgemäßen thermoplastischen Polyurethan-Pulvers. Vorzugsweise ist das Formteil frei von Gelpartikeln. Die Gelpartikel werden mit einer so genannten Gelbestimmung ermittelt. Dabei wird das thermoplastische Polyurethan-Pulver in einen Standardstab (Dimension 80 mm x 10 mm x 4 mm) spritzgegossen. Der Stab wird mit der flachen Seite auf einen

Leuchttisch gelegt. Die Gelpartikel sind mit dem bloßen Auge im Durchlicht als helle Flecken in der sonst homogenen Probe erkennbar. Zusätzlich werden die kreisförmigen Vertiefungen auf der glatten Oberfläche der Probekörper, die durch Gelpartikel nahe der Oberfläche erzeugt werden, gezählt. Um kleinere Fehler des Spritzgusses zu berücksichtigen, wird bei einer Summe der gezählten Gelpartikel $X < 5$ die Probe als frei ("frei von Gelpartikeln"), bei $5 < X < 15$ als wenig, $15 < X < 30$ als viel und $X > 30$ als sehr viel mit Gelen belastet, gewertet.

**Ausführungsformen:**

Die Erfindung betrifft insbesondere folgende Ausführungsforinen:
Nach einer ersten Ausfuhrungsform betrifft die Erfindung ein Verfahren zur Herstellung eines thermoplastischen Polyurethan-Pulvers mittels Fällungspolymerisation, umfassend die Schritte:

i. Bereitstellung

A) eines Lösungsmittels;
B) wenigstens eines Polyols B1) mit einer Molmasse von 60 g/mol bis 250 g/ mol;
C) wenigstens eines Diisocyanats C1);
D) optional eines Katalysators;
E) optional eines Kettenregulators E1) und/oder eines Additivs E2);

wobei zusätzlich

B) mindestens ein weiteres von Polyol B1) verschiedenes Polyol B2), bevorzugt mit einer Molmasse von 60 g/mol bis 250 g/ mol,
und/oder

C) mindestens ein weiteres von Diisocyanat C1) verschiedenes Diisocyanat C2)
aufweist, und

die Menge an Polyol B2) und an Diisocyanat C2) in Summe ≤ 10 Gew.-% ausmacht, bezogen auf die Gesamtmenge des Polyols B), des Diisocyanats C) und gegebenenfalls des Kettenregulators E1);

ii. Umsetzung des Polyols B) mit dem Diisocyanat C) in dem Lösungsmittel A) bei einer Temperatur von höchstens 150 °C, vorzugsweise bei Erhitzen des Lösungsmittels A) unter Rückfluss und optional einem Druck von 0,5 bis 3,0 bar, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittel A), bevorzugt während der Umsetzung, ausfällt und eine Dispersion bildet;

iii. Abtrennung von dem Lösungsmittel A) und optionale Waschung des thermoplastischen Polyurethans mit einem Lösungsmittel; und

iv. Trocknung des thermoplastischen Polyurethans zu dem thermoplastischen Polyurethan-Pulver;

wobei das thermoplastische Polyurethan-Pulver

- ein Massenmittel der Molmasse Mw von ≥ 45000 g/mol;
- einen Allophanatgehalt von ≤ 0,25 mol-%, bezogen auf das gesamte thermoplastische Polyurethan-Pulver; und
- ≥ 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.
Nach einer zweiten Ausführungsform betrifft die Erfindung ein Verfahren nach der ersten Ausführungsform, dadurch gekennzeichnet, dass das Lösungsmittel A) halogenierte Aromaten, Aromaten, Ketone, Ether, Ester und Carbonate oder Mischungen davon, insbesondere Chlorbenzol und/oder ortho-Dichlorbenzol; Benzol; Toluol; Ethylbenzol; Cumol; Xylol; Cyclopentanon, Cyclohexanon; Heptan-4-on; Butylacetat; Amylacetat; Methoxypropylacetat oder Mischungen davon, bevorzugt Chlorbenzol umfasst oder daraus besteht.
Nach einer dritten Ausführungsform betrifft die Erfindung ein Verfahren nach der ersten oder zweiten Ausführungsform, dadurch gekennzeichnet, dass das Polyol B1) und das Polyol B2) jeweils ausgewählt sind aus der Gruppe, umfassend oder bestehend aus Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen von diesen, wobei bevorzugt das Polyol B1) 1,4-Butandiol umfasst oder daraus besteht und/oder das Polyol B2) 1,3-Propandiol, 1,6-Hexandiol, Neopentylglycol oder 1,10-Decandiol umfasst oder daraus besteht.

Nach einer vierten Ausfuhrungsform betrifft die Erfindung ein Verfahren nach einer der vorstehenden Ausfiihrungsformen, dadurch gekennzeichnet, dass das Diisocyanat C1) und das Diisocyanat C2) jeweils ausgewählt sind aus der Gruppe, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat, 4,4'-Methylendiphenylisocyanat oder Mischungen von diesen, wobei bevorzugt das Diisocyanat C1) 1,6-Hexandiisocyanat umfasst oder daraus besteht und/oder das Diisocyanat C2) 1,5-Pentandiisocyanat, Isophorondiisocyanat, 1,1'-Methylenbis(4-isocyanatocyclohexan oder 4,4'-Methylendiphenylisocyanat umfasst oder daraus besteht.

Nach einer fünften Ausfuhrungsform betrifft die Erfindung ein Verfahren nach einer der vorstehenden Ausführungsformen, dadurch gekennzeichnet, dass die Menge an Polyol B2) und an Diisocyanat C2) in Summe von 1,0 bis 8,0 Gew.-% ausmacht, bevorzugt 1,5 bis 6,0 Gew.-%, bezogen auf die Gesamtmenge der Komponenten B), C) und gegebenenfalls E1).

Nach einer sechsten Ausfuhrungsform betrifft die Erfindung ein Verfahren nach einer der vorstehenden Ausfiihrungsformen, dadurch gekennzeichnet, dass

- das Polyol B1) in einer Menge von 15,0 bis 65,0 Gew.-%, bevorzugt 25,0 bis 40,0 Gew.-%, und/oder
- das Diisocyanat C1) in einer Menge von 35,0 bis 85,0 Gew-%, bevorzugt 60,0 bis 75,0 Gew.-%,

eingesetzt werden, jeweils bezogen auf die Gesamtmenge der Komponenten B), C) und gegebenenfalls E1.

Nach einer siebten Ausfuhrungsform betrifft die Erfindung ein Verfahren nach einer der vorstehenden Ausfiihrungsformen, dadurch gekennzeichnet, dass die Umsetzung in Schritt ii. bei einer Temperatur von 100 °C bis 150 °C, bevorzugt von 120 °C bis 145 °C, weiter bevorzugt von 130 °C bis 140 °C erfolgt und/oder bei einer Isocyanat-Kennzahl von 0,95 bis 1,1, bevorzugt 0,97 bis 1,02, weiter bevorzugt 0,98 bis 1,0 erfolgt.

Nach einer achten Ausfuhrungsform betrifft die Erfindung ein Verfahren nach einer der vorstehenden Ausfiihrungsformen, dadurch gekennzeichnet, dass die Umsetzung in Schritt ii. bei einem Druck von 0,75 bis 2,0 bar, bevorzugt von 1,0 bis 1,5 bar erfolgt, wobei der Druck vorzugsweise derart gewählt wird, dass dadurch der Siedepunkt des Lösungsmittels A) eingestellt wird, bevorzugt auf eine Temperatur von höchstens 150 °C, weiter bevorzugt von 100 °C bis 150 °C, noch weiter bevorzugt von 120 °C bis 145 °C, besonders bevorzugt von 130 °C bis 140 °C.

Nach einer neunten Ausfuhrungsform betrifft die Erfindung ein Verfahren nach einer der vorstehenden Ausfiihrungsformen, dadurch gekennzeichnet, dass die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

Nach einer zehnten Ausfuhrungsform betrifft die Erfindung ein Verfahren nach einer der vorstehenden Ausfiihrungsformen, dadurch gekennzeichnet, dass das thermoplastische Polyurethan-Pulver

- ein Massenmittel der Molmasse Mw von 50000 bis 300000 g/mol, bevorzugt von 55000 bis 150000 g/mol, besonders bevorzugt von 60000 bis 120000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100,0 Gew.-%, weiter bevorzugt von 40,0 bis 80,0 Gew.-% einer Partikelfraktion von < 0,500 mm, bezogen auf das gesamte thermoplastischen Polyurethan-Pulver und/oder ein Verhältnis von Zentrifugenmittel der Molmasse Mz zu Massenmittel der Molmasse Mw von ≤ 3,0, bevorzugt von 1,5 bis 2,2;

aufweist.

Nach einer elften Ausfuhrungsform betrifft die Erfindung ein Verfahren nach einer der vorstehenden Ausfiihrungsformen, dadurch gekennzeichnet, dass das thermoplastische Polyurethan nach Schritt iii. und/oder das thermoplastische Polyurethan-Pulver nach Schritt iv. mit einem Stabilisator aus einer Stabilisatorlösung imprägniert wird, wobei dafür das thermoplastische Polyurethan nach Schritt iii. und/oder das thermoplastische Polyurethan-Pulver nach Schritt iv. in der Stabilisatorlösung dispergiert und anschließend abgetrennt sowie getrocknet wird.

Nach einer zwölften Ausfuhrungsform betrifft die Erfindung ein Verfahren nach der elften Ausführungsform, dadurch gekennzeichnet, dass die Stabilisatorlösung

- ein Lösungsmittel, welches aus der Gruppe ausgewählt ist, umfassend oder bestehend aus Lösungsmitteln der

Gruppe chlorierte Aromaten; Aromaten; Aliphaten; Ester; Ether; Alkohole; Wasser; Ketone; Nitrile; Carbonate; oder Mischungen davon, oder bevorzugt dem Lösungsmittel A) aus Schritt i. entspricht, wobei das Lösungsmittel vorzugsweise einen Siedepunkt von < 250 °C bei 1 bar aufweist; und

- einen darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate, schwefelhaltige Antioxidantien, 2,2,6,6-Tetramethylpiperidin-Derivate, Benzotriazol-Derivate, Triazin-Derivate, Hydroxybenzophenon-Derivate, Cyanoacrylat-Derivate, Oxalinid-Derivate oder Mischungen davon;

umfasst oder daraus besteht, wobei der Gewichtsanteil des Stabilisators vorzugsweise von 0,001 bis 10,0 Gew.-%, weiter bevorzugt von 0,05 bis 5,0 Gew.-% beträgt, bezogen auf das Gesamtgewicht der Stabilisatorlösung.

Nach einer dreizehnten Ausführungsform betrifft die Erfindung ein Verfahren nach der elften oder zwölften Ausführungsform, dadurch gekennzeichnet, dass das thermoplastische Polyurethanpulver 0,005 bis 2,0 Gew.-% des Stabilisators aus der Stabilisatorlösung aufweist, bezogen auf das Gesamtgewicht des thermoplastischen Polyurethanpulvers.

Nach einer vierzehnten Ausführungsform betrifft die Erfindung ein thermoplastisches Polyurethan-Pulver, erhalten oder erhältlich nach einem Verfahren gemäß einer der Ausfiihrungsformen 1 bis 13.

Nach einer fünfzehnten Ausführungsform betrifft die Erfindung die Verwendung eines thermoplastischen Polyurethan-Pulvers gemäß der vierzehnten Ausführungsform in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Nach einer sechszehnten Ausführungsform betrifft die Erfindung ein Formteil, erhalten oder erhältlich durch die Verarbeitung eines thermoplastischen Polyurethan-Pulvers nach der vierzehnten Ausführungsform.

Nach einer siebzehnten Ausführungsform betrifft die Erfindung ein Formteil nach der sechszehnten Ausführungsform, dadurch gekennzeichnet, dass das Formteil frei von Gelpartikeln ist, wobei "frei von Gelpartikeln" wie in der Beschreibung dargelegt definiert und bestimmt wird.

## Beispiele

Die vorliegende Erfindung wird anhand der nachfolgenden Beispiele näher erläutert.

### Messmethoden:

Folgende Messmethoden wurden verwendet:

GPC-Methode zur Bestimmung von Zahlenmittel der Molmasse Mn, Massenmittel der Molmasse Mw und Zentrifugenmittel der Molmasse Mz:

Bestimmung mittels Gelpermeationschromatographie (GPC). Dazu wurde die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH); |
| Detektor: | Smartline RI-Detektor 2300 (Knauer Wissenschaftliche Geräte GmbH); |
| Säulen: | 1 Vorsäule, 1000 Å PSS PFG 7μm, 300 Å PSS PFG 7μm, 100 Å PSS; PFG 7μm in dieser Reihenfolge (PSS Polymer Standards Service GmbH); |
| Entgasung: | Degasser PSS (PSS Polymer Standards Service GmbH); |
| Injektionsvolumen: | 100 Mikroliter; |
| Temperatur: | 23 °C - 25 °C; |
| Molmassen-Standard: | Polymethylmethacrylat-Standard-Kit (PSS Polymer Standards Service GmbH). |

Das Zahlenmittel der Molmasse ($\overline{M}_n$) wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i} \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Allophanatgehalt:

Der Allophanatgehalt wurde mittels $^1$H-NMR bestimmt. Die Messungen wurden mit einem Bruker AV III HD 600 Spektrometer bei 600 MHz in DMSO-D6 bei 80 °C durchgeführt.

Folgende Peaks wurden ausgewertet:

| | | |
|---|---|---|
| U=C**H**$_2$-NH | 2.98 ppm | $CH_2$ bei Urethan |
| O=C**H**$_2$-OH | 3.43 ppm | $CH_2$ bei OH-Gruppen |
| N=N-**H** | 6.6 ppm | Urethan |
| A= N-**H** | 8.3-8.4 ppm | Allophanat |

Die aliphatische Allophanat Konzentration in mol-% wurde nach folgender Formel berechnet:

$$\text{Allophanat [mol-\%]} = 100\ \% * A/\ (A+N)$$

Die Kennzahl für den Umsatz ergibt sich aus der Formel:

$$KZ = 1/\ (1+O/U)$$

Herstellung Probekörper für die Zugversuche

Das Polymer wurde bei 80 °C im Trockenschrank für 4 h getrocknet und anschließend auf einem Mikroextruder

MC 15 HT (15 mL) der Firma Xplore verarbeitet und mit dem dazugehörigen Spritzgußteil Micro moulder IM 12 in die benötigte Form gebracht.

<u>Bestimmung des E-Modul/Zugmoduls, der Streckspannung, der Streckdehnung und der Bruchdehnung:</u>

Die Zugprüfung wurde in Anlehnung an die Prüfmethode DIN EN ISO 527 mit Probekörpern Typ 5A (DIN EN ISO 527-2, Dicke 2 mm) durchgeführt. Die Probekörper wurden vor dem Versuch mindestens 24 h bei Normbedingungen gelagert. Die Zugversuche erfolgten bei 22 °C und 50 % relativer Feuchte, durchgeführt mit einer Universalprüfmaschine Z010 der Fa. Zwick mit einer Geschwindigkeit von 10 mm/ min. Der E-Modul (bzw. das Zugmodul) wurde zwischen 0,05 % und 0,25 % Dehnung ermittelt mittels Sekante.

<u>Isocyanat-Titration:</u>

Durch Rücktitration von Dibutylamin mit 0,1 N Salzsäure nach Zugabe eines Aminüberschusses zu einer Isocyanatlösung unter Zuhilfenahme eines Metrohm, 751 GPD titrino 685 Dosimat und 728 Rührer.

<u>Siebung:</u>

100 g Probenmenge wurden 5 min mit einer Haver & Boecker Laborsiebmaschine Nr. 7279 (Bj. 1978) und den entsprechenden Siebsätzen (0,100 mm, 0,250 mm und 0,500 mm) gesiebt und die einzelnen Fraktionen danach gewogen.

**Materialien:**

Für die Komponenten A) bis E) wurden die folgenden Materialien eingesetzt:

<u>Lösungsmittel A):</u>

- Chlorbenzol (MCB) in Analysenqualität, bezogen von der Firma Azelis Deutschland GmbH, relative Permittivität: $\square_r$ = 5,6 (siehe Literatur 1.) weiter unten)
- Dimethylsulfoxid (DMSO) 99,9 %, bezogen von der Firma Merck, relative Permittivität: $\varepsilon_r$ = 47,3 (siehe Literatur 2.) weiter unten)

Literatur: 1.) DK Handbook, Endress+Hauser Messtechnik GmbH&Co. (1999); 2.) Hunger et al J. Chem. Eng. Data 2010, 55, 5, 2055-2065.

<u>Polyol B1):</u>

- 1,4-Butandiol (BDO) (Firma: Ashland), Reinheit: ≥ 99 % Gew.-%.

<u>Polyol B2):</u>

- 1,6-Hexandiol (HDO) (Firma Sigma-Aldrich), Reinheit: ≥ 96,5 Gew.-%;
- 2,2-Dimethyl-1,3-propandiol (Neopentylglykol, NPG) (Firma Sigma-Aldrich), Reinheit: ≥ 99 Gew.-%,
- 1,10-Decandiol (DDO) (Firma Sigma-Aldrich), Reinheit: ≥ 98 Gew.-%;
- 1,3-Propandiol (PDO) (Firma Sigma-Aldrich), Reinheit: ≥ 98 Gew.-%.

<u>Diisocyanat C1):</u>

- 1,6-Hexamethylendiisocyanat (HDI) (Firma: Covestro AG), Reinheit: ≥ 99 % Gew.-%.

Diisocyanat C2):

- Isophorondiisocyanat (IPDI) (Firma Covestro AG), Reinheit: ≥ 99 Gew.-%;
- 4,4'-Methylendiphenylisocyanat (MDI) (Firma: Covestro AG, Reinheit: ≥ 99 % Gew.-%.

Katalysator D):

- Titandiisopropoxid-bis(acetylacetonat) (Firma Sigma-Aldrich), Reinheit: 75 Gew.-% in Isopropanol;

Kettenregulator E1):

- n-Octanol in Analysenqualität, bezogen von der Firma Arcos Organics, Reinheit: ≥ 99 % Gew.-%.

Additiv E2):

- Irganox™ 245 der Firma BASF
- Irgafos™ 168 der Firma BASF

**Versuchsdurchführung und Ergebnisse:**

Versuch 1: Versuche mit steigendem Zusatz von Polyol B2)

Es wurden 1200 mL Chlorbenzol, BDO (Polyol B1)), gegebenenfalls DDO (Polyol B2)), Octan-1-ol und 15 mg Titandiisopropoxid-bis(acetylacetonat) in einem 2L Reaktionsgefäß mit Thermometer, Rückflußkühler und mechanischen Rührer eingefüllt und die Mischung auf dem Ölbad bis zum Rückfluß (ca 132 °C) erwärmt. Nun wurde HDI (Diisocyanat C1)) mit Tropftrichter unter Rühren in 8 min zugegeben. Die Mischung siedete am Rückfluß sehr heftig. Nach beendeter HDI-Zugabe wurde weitere 5 h am Rückfluß erhitzt. Das thermoplastische Polyurethan fiel als weißes Pulver aus. Die Dispersion wurde auf Restgehalt Isocyanat getestet, mit Butanol neutralisiert und auf Raumtemperatur unter ständigem Rühren abgekühlt. Die Mischung wurde abfiltriert (Nutsche) und der Rückstand 3 mal mit 200 mL Chlorbenzol nachgewaschen. Der weiße Feststoff wurde bei 80 °C 24 h im Umluftofen getrocknet.

Demgemäß wurden die Versuche 1a, 1b, 1c, 1d, 1e und 1f durchgeführt, bei denen unterschiedliche Mengen an Polyol B2) (DDO) eingesetzt wurden. Die entsprechenden Mengen der Komponenten sind in Tabelle 1 zusammengefasst:

**Tabelle 1**

| Versuch | BDO [g] | DDO [g] (Gew.-%)*** | Octan-1-ol [g] | HDI [g] |
|---|---|---|---|---|
| 1a* | 138,91 | 0 (0) | 1,96 | 260,9 |
| | | | | |
| 1b** | 134,84 | 8,12 (2) | 1,96 | 260,9 |
| 1c** | 130,63 | 16,33 (4) | 1,96 | 260,9 |
| 1d** | 126,46 | 24,40 (6) | 1,96 | 260,9 |
| 1e** | 121,75 | 33,54 (8) | 1,96 | 260,9 |
| 1f** | 117,50 | 41,96 (10) | 1,96 | 260,9 |

*(nicht erfindungsgemäß); **(erfindungsgemäß); ***Menge des Polyol B2) (hier DDO) in Gew.-%, bezogen auf die Gesamtmenge des Polyols B), des Diisocyanats C) und der Komponente E1) (Octan-1-ol)

Aus den thermoplastischen Polyurethanpulvern der Versuche 1a, 1b, 1c , 1d, 1e und 1f wurden - wie oben beschrieben - die Massenmittel der Molmasse, das Verhältnis von Zentrifugenmittel der Molmasse Mz zu Massenmittel der Molmasse Mw (Mz/Mw) bestimmt sowie Probekörper für Zugversuche hergestellt, welche hinsichtlich des Zugmoduls, der Streckspannung, der Streckdehnung und der Bruchdehnung untersucht wurden. Die Ergebnisse sind nachstehend in Tabelle 2 zusammengefasst:

**Tabelle 2**

| Versuch | Allophanatgehalt [mol%] | Mw [g/mol] | Mz/Mw | Zugmodul [MPa] | Streckspannung [MPa] | Streckdehnung [%] | Bruchdehnung [%] |
|---|---|---|---|---|---|---|---|
| 1a* | <0,1 | 57615 | 1,8 | 1380 | 54 | 20 | 210 |
| | DDO | | | | | | |
| 1b** | <0,1 | 65052 | 1,9 | 1432 | 53 | 19 | 315 |
| 1c** | <0,1 | 84488 | 1,9 | 1340 | 52 | 21 | 259 |
| 1d** | <0,1 | 109006 | 2,1 | 1227 | 48 | 22 | 208 |
| 1e** | <0,1 | 132883 | 2,1 | 815 | 40 | 24 | 275 |
| 1f** | <0,1 | 132373 | 2,0 | 766 | 38 | 25 | 309 |

* (nicht erfindungsgemäß); **(erfindungsgemäß).

Wie aus Tabelle 2 zu entnehmen ist, führt der erfindungsgemäße Zusatz von Polyol B2) (bzw. der teilweise Austausch von Polyol B1) mit Polyol B2)) zu einer deutlichen Erhöhung der Molmasse Mw (Versuche 1b, 1c, 1d, 1e und 1f) im Vergleich zu einer Fällungspolymerisation, bei der nur Polyol B1) eingesetzt wird (Versuch 1a). Weiterhin ist zu erkennen, dass bei den erfindungsgemäßen Versuchen die weiteren physikalisch-chemischen Eigenschaften (Mz/Mw) und die mechanischen Eigenschaften der aus den Pulvern erhaltenen Probekörpern weiterhin gut sind, insbesondere bis 8 Gew.-% (Versuche 1b, 1c und 1d), und ab 8 Gew.-% (Versuche 1e und 1f) ein langsamer Abfall des Zugmoduls und ein Übergang zu mehr elastischen Eigenschaften beginnt und die Molmasse Mw nur noch wenig beeinflußt wird.

Versuch 2: Versuche mit Zusatz von verschiedenen Polyolen B2) oder Diisocyanaten C2)

Es wurden 1200 mL Chlorbenzol, Butan-1,4-diol (BDO, Polyol B1)), gegebenenfalls Polyol B2) und Octan-1-ol in ein 2L Reaktionsgefäß mit Thermometer, Rückflußkühler und mechanischen Rührer eingefüllt und die Mischung auf dem Ölbad bis zum Rückfluß (ca 132 °C) erwärmt. Nun wurden gegebenenfalls zunächst Diisocyanat C2) schnell zugetropft, 30 min am Rückfluß gesiedet und anschließend HDI (Diisocyanat C1)) gleichmäßig innerhalb einer Stunde mit Tropftrichter unter Rühren so zugegeben, dass die Mischung am Rückfluß siedete. Nach beendeter HDI Zugabe wurde weitere 12 h am Rückfluß erhitzt. Das thermoplastische Polyurethan fiel als weißes Pulver aus. Die Lösung wurde auf Restgehalt Isocyanat getestet, mit Butanol neutralisiert und auf Raumtemperatur unter ständigem Rühren abgekühlt. Die Dispersion wurde abfiltriert und der Rückstand 3 mal mit 200 mL Chlorbenzol nachgewaschen. Der weiße Feststoff wurde bei ca 80 °C 24 h im Umluftofen getrocknet.

Demgemäß wurden die Versuche 2a, 2b, 2c, 2d, 2e und 2f durchgeführt, bei denen unterschiedliche Mengen an Polyol B2) oder Diisocyanat C2) eingesetzt wurden. In den Fällen, wo entweder Polyol B2) oder Diisocyanat C2) zugesetzt wurden (also Beispiel 2b-2f) machte die Menge an Polyol B2) und an Diisocyanat C2) in Summe 4 Gew.-% aus, bezogen auf die Gesamtmenge des Polyols B), des Diisocyanats C) und der Komponente E1) (Octan-1-ol). Die entsprechenden Mengen sind in Tabelle 3 zusammengefasst:

**Tabelle 3**

| Versuch | BDO [g] | Polyol B2) [g] | Octan-1-ol [g] | HDI [g] | Isocyanat C2) [g] |
|---|---|---|---|---|---|
| 2a* | 138,84 | 0 | 0,98 | 262,5 | 0 |
| 2b** | 126,66 | 16,37 HDO | 0,98 | 262,5 | 0 |
| 2c** | 124,99 | 16,31 PDO | 0,98 | 262,5 | 0 |
| 2d** | 124,92 | 16,34 NPG | 0,98 | 262,5 | 0 |
| 2e** | 138,86 | 0 | 0,98 | 250,21 | 16,26 IPDI |
| 2f** | 138,80 | 0 | 0,98 | 251,5 | 16,3 MDI |
| *(nicht erfindungsgemäß); **(erfindungsgemäß) | | | | | |

Aus den thermoplastischen Polyurethanpulvern der Versuche 2a, 2b, 2c, 2d, 2e und 2f wurden - wie weiter oben beschrieben - die Massenmittel der Molmasse, das Verhältnis von Zentrifugenmittel der Molmasse Mz zu Massenmittel der Molmasse Mw (Mz/Mw) bestimmt sowie Probekörper für Zugversuche hergestellt, welche hinsichtlich des Zugmoduls, der Streckspannung, der Streckdehnung und der Bruchdehnung untersucht wurden. Die Ergebnisse sind nachstehend in Tabelle 4 zusammengefasst:

**Tabelle 4**

| Versuch | Mw [g/mol] | Mz/Mw | Allophanatgehalt [mol%] | Zugmodul [MPa] | Streckspannung [MPa] | Streckdehnung [%] | Bruchdehnung [%] |
|---|---|---|---|---|---|---|---|
| 2a* | 71074 | 2,6 | <0,1 | 1364 | 51 | 19 | 254 |
| 2b** | 106512 | 2,8 | <0,1 | 1124 | 46 | 27 | 172 |
| 2c** | 108962 | 3,0 | <0,1 | 1177 | 47 | 21 | 231 |
| 2d** | 110983 | 2,9 | <0,1 | 1348 | 49 | 21 | 184 |
| 2e** | 101882 | 3,3 | <0,1 | 1525 | 51 | 19 | 204 |

(fortgesetzt)

| Versuch | Mw [g/mol] | Mz/Mw | Allophanatgehalt [mol%] | Zugmodul [MPa] | Streckspannung [MPa] | Streckdehnung [%] | Bruchdehnung [%] |
|---|---|---|---|---|---|---|---|
| 2f** | 100932 | 2,8 | <0,1 | 1384 | 50 | 23 | 173 |
| *(nicht erfindungsgemäß); ** (erfindungsgemäß) | | | | | | | |

Auch hier zeigt sich, dass die erfindungsgemäßen thermoplastischen Polyurethan-Pulver der Versuche 2b-2f im Vergleich zu dem nicht-erfindungsgemäßen erfindungsgemäßen thermoplastischen Polyurethan-Pulver aus Versuch 2a eine deutlich höhere Molmasse Mw aufweisen. Dies ist sowohl durch den Zusatz eines erfindungsgemäßen Polyol B2) als auch eines erfindungsgemäßen Diisocyanat C2) der Fall (bzw. durch den teilweisen Austausch von Polyol B1) durch Polyol B2) bzw. Diisocyanat C1) durch Diisocyanat C2)). Überdies sind sowohl die weiteren Materialeigenschaften als auch die mechanischen Eigenschaften der aus den Pulvern hergestellten Probekörpern weiterhin gut und mit dem nicht-erfindungsgemäßen Beispiel vergleichbar.

Versuch 3: Druckerhöhung

Versuch 3a ohne Druck

In einem 960L Reaktor mit Impeller-Rührer wurden 450 kg Chlorbenzol, 3,00 kg (25,38 mol) Hexan-1,6-diol, 50,07 kg (555,63 mol) Butan-1,4-diol und 0,15 kg (1,14 mol) Octan-1-ol unter Normaldruck auf Rückfluß unter Rühren erhitzt. Danach wurden ca 5-10 kg Chlorbenzol abdestilliert um Reste an Wasser azeotrop zu entfernen. Anschließend wurde das HDI (98,46 kg; 585,4 mol) so zudosiert, dass die Reaktion nicht zu heftig reagiert (stark exotherm; 2 h) und der Rückfluß (bei ca 132 °C) kontrollierbar blieb. Das thermoplastische Polyurethan fiel als weißer Niederschlag aus. Nach beendeter Zugabe des HDI wurde die Reaktionsmischung für 12 h weiter am Rückfluß (ca 132 °C) erhitzt.

Die Reaktionsmischung wurde abgekühlt und Butanol zum Quenchen des überschüssigen HDI zugegeben. Das Produkt wurde über eine Rührwerksnutsche abfiltriert und einmal mit 220 kg Chlorbenzol und dann einmal mit 220 kg Chlorbenzol, in dem 1 kg Irgafos 168 und 1 kg Irganox 245 vorher gelöst wurden, gewaschen. Der feuchte Filterkuchen wurde im Vakuum mit leichten Stickstoffstrom zum Ende bei 80 °C Bettemperatur (Schaufeltrockner; Vorlauftemperatur 100 °C) bis zur Gewichtskonstanz (kein MCB Geruch mehr bzw. MCB im GC <<100ppm) getrocknet.

Das erhaltene Polymer war ein weißes Pulver mit einem Molekulargewicht Mw von 67700 g/ mol und einem Verhältnis Mz/Mw von 2,3. Die NMR Messung ergab einen Allophanatgehalt von << 0.1 mol%. Das Pulver hatte nach Siebturmanalyse eine Partikelverteilung von

| | |
|---|---|
| <32μm: | 2,7 % |
| >32μm <112μm: | 55,2 % |
| >112μm <250μm: | 32,0 % |
| >250μm <500μm: | 1,0 % |
| >500μm: | 8,7 % |

Versuch 3b mit erhöhtem Druck und Temperatur

In einem 960L Reaktor mit Impeller-Rührer wurden 450 kg Chlorbenzol, 3,00 kg (25,38 mol) Hexan-1,6-diol, 50,25 kg (557,63 mol) Butan-1,4-diol und 0,15 kg (1,14 mol) Octanol unter Normaldruck auf Rückfluß (ca. 132 °C) unter Rühren erhitzt. Danach wurden ca 5-10 kg Chlorbenzol abdestilliert um Reste an Wasser azeotrop zu entfernen. Anschließend wurden der Druck (auf ca. 1,17 - 1,2 bar) und die Temperatur im Reaktor erhöht, so dass sich die Siedetemperatur der Reaktionsmischung bei 138 °C einstellte. Jetzt wurde das HDI (98,46 kg; 585,4 mol) bei 138 °C so zudosiert, dass die Mischung nicht zu heftig reagierte (stark exotherm; 2 h) und der Rückfluß (bei ca. 138 °C) kontrollierbar blieb. Das Produkt fiel als weißer Niederschlag aus. Nach beendeter Zugabe des HDI wurde die Reaktionsmischung für 12 h weiter am Rückfluß bei 138 °C erhitzt.

Die Reaktionsmischung wurde abgekühlt und Butanol zum Quenchen des überschüssigen HDI zugegeben. Das Produkt wurde über eine Rührwerksnutsche abfiltriert und einmal mit 220 kg Chlorbenzol und dann einmal mit 220 kg Chlorbenzol, in dem 1 kg Irgafos 168 und 1 kg Irganox 245 vorher gelöst wurden, gewaschen. Der feuchte Filterkuchen wurde im Vakuum mit leichten Stickstoffstrom zum Ende bei 80 °C Bettemperatur (Schaufeltrockner; Vorlauftemperatur 100 °C) bis zur Gewichtskonstanz (kein MCB Geruch mehr bzw. MCB im GC << 100ppm) getrocknet.

Das erhaltene Polymer war ein weißes Pulver mit einem Molekulargewicht Mw von 71100 g/ mol und einem

Verhältnis Mz/Mw von 1,8. Der Allophanatgehalt war <0,1 mol%. Das Pulver hatte nach Siebturmanalyse eine Partikelverteilung von

| | |
|---|---|
| <112μm: | 42,1 % |
| >112μm <250μm: | 38,3 % |
| >250μm <500μm: | 18,8 % |
| >500μm: | 0,8 % |

Die Versuche 3a und 3b zeigen, dass wenn die Umsetzung in Schritt ii. des erfindungsgemäßen Verfahrens noch zusätzlich bei einem Druck von 0,5 bis 3,0 bar durchgeführt wird, ein Erhitzen des Lösungsmittels A) unter Rückfluss bei höheren Temperaturen ermöglicht wird (d.h. die Siedetemperatur eingestellt werden kann) und damit die Molmasse Mw des thermoplastischen Polyurethan-Pulvers noch weiter erhöht werden kann.

## Patentansprüche

**1.** Verfahren zur Herstellung eines thermoplastischen Polyurethan-Pulvers mittels Fällungspolymerisation, umfassend die Schritte:

i. Bereitstellung

A) eines Lösungsmittels;
B) wenigstens eines Polyols B1) mit einer Molmasse von 60 g/mol bis 250 g/ mol;
C) wenigstens eines Diisocyanats C1);
D) optional eines Katalysators;
E) optional eines Kettenregulators E1) und/oder eines Additivs E2);

wobei zusätzlich

B) mindestens ein weiteres von Polyol B1) verschiedenes Polyol B2)
und / oder
C) mindestens ein weiteres von Diisocyanat C1) verschiedenes Diisocyanat C2)

aufweist, und
die Menge an Polyol B2) und an Diisocyanat C2) in Summe ≤ 10 Gew.-% ausmacht, bezogen auf die Gesamtmenge des Polyols B), des Diisocyanats C) und gegebenenfalls des Kettenregulators E1);
ii. Umsetzung des Polyols B) mit dem Diisocyanat C) in dem Lösungsmittel A) bei einer Temperatur von höchstens 150 °C und optional einem Druck von 0,5 bis 3,0 bar, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittel A) ausfällt und eine Dispersion bildet;
iii. Abtrennung von dem Lösungsmittel A) und optionale Waschung des thermoplastischen Polyurethans mit einem Lösungsmittel; und
iv. Trocknung des thermoplastischen Polyurethans zu dem thermoplastischen Polyurethan-Pulver;

wobei das thermoplastische Polyurethan-Pulver

- ein Massenmittel der Molmasse Mw von ≥ 45000 g/mol;
- einen Allophanatgehalt von ≤ 0,25 mol-%, bezogen auf das gesamte thermoplastische Polyurethan-Pulver; und
- ≥ 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von ≤ 4,0;

aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.

**2.** Verfahren nach Anspruch 1, **dadurch gekennzeichnet, dass** das Lösungsmittel A) halogenierte Aromaten, Aromaten, Ketone, Ether, Ester und Carbonate oder Mischungen davon, insbesondere Chlorbenzol und/oder

ortho-Dichlorbenzol; Benzol; Toluol; Ethylbenzol; Cumol; Xylol; Cyclopentanon, Cyclohexanon; Heptan-4-on; Butylacetat; Amylacetat; Methoxypropylacetat oder Mischungen davon, bevorzugt Chlorbenzol umfasst oder daraus besteht.

**3.** Verfahren nach Anspruch 1 oder 2, **dadurch gekennzeichnet, dass** das Polyol B1) und das Polyol B2) jeweils ausgewählt sind aus der Gruppe, umfassend oder bestehend aus Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen von diesen, wobei bevorzugt das Polyol B1) 1,4-Butandiol umfasst oder daraus besteht und/oder das Polyol B2) 1,3-Propandiol, 1,6-Hexandiol, Neopentylglycol oder 1,10-Decandiol umfasst oder daraus besteht.

**4.** Verfahren nach einem der vorstehenden Ansprüche, **dadurch gekennzeichnet, dass** das Diisocyanat C1) und das Diisocyanat C2) jeweils ausgewählt sind aus der Gruppe, umfassend oder bestehend aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat, 4,4'-Methylendiphenylisocyanat oder Mischungen von diesen, wobei bevorzugt das Diisocyanat C1) 1,6-Hexandiisocyanat umfasst oder daraus besteht und/oder das Diisocyanat C2) 1,5-Pentandiisocyanat, Isophorondiisocyanat, 1,1'-Methylenbis(4-isocyanatocyclohexan oder 4,4'-Methylendiphenylisocyanat umfasst oder daraus besteht.

**5.** Verfahren nach einem der vorstehenden Ansprüche, **dadurch gekennzeichnet, dass** die Menge an Polyol B2) und an Diisocyanat C2) in Summe von 1,0 bis 8,0 Gew.-% ausmacht, bevorzugt 1,5 bis 6,0 Gew.-%, bezogen auf die Gesamtmenge der Komponenten B), C) und gegebenenfalls E1).

**6.** Verfahren nach einem der vorstehenden Ansprüche, **dadurch gekennzeichnet, dass**

- das Polyol B1) in einer Menge von 15,0 bis 65,0 Gew.-%, bevorzugt 25,0 bis 40,0 Gew.-%; und/oder
- das Diisocyanat C1) in einer Menge von 35,0 bis 85,0 Gew-%, bevorzugt 60,0 bis 75,0 Gew.-%;

eingesetzt werden, jeweils bezogen auf die Gesamtmenge der Komponenten B), C) und gegebenenfalls E1).

**7.** Verfahren nach einem der vorstehenden Ansprüche, **dadurch gekennzeichnet, dass** die Umsetzung in Schritt ii. bei einer Temperatur von 100 °C bis 150 °C, bevorzugt von 120 °C bis 145 °C, weiter bevorzugt von 130 °C bis 140 °C erfolgt und/oder bei einer Isocyanat-Kennzahl von 0,95 bis 1,1, bevorzugt 0,97 bis 1,02, weiter bevorzugt 0,98 bis 1,0 erfolgt.

**8.** Verfahren nach einem der vorstehenden Ansprüche, **dadurch gekennzeichnet, dass** die Umsetzung in Schritt ii. bei einem Druck von 0,75 bis 2,0 bar, bevorzugt von 1,0 bis 1,5 bar erfolgt.

**9.** Verfahren nach einem der vorstehenden Ansprüche, **dadurch gekennzeichnet, dass** die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

**10.** Verfahren nach einem der vorstehenden Ansprüche, **dadurch gekennzeichnet, dass** das thermoplastische Polyurethan-Pulver

- ein Massenmittel der Molmasse Mw von 50000 bis 300000 g/mol, bevorzugt von 55000 bis 150000 g/mol, besonders bevorzugt von 60000 bis 120000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100,0 Gew.-%, weiter bevorzugt von 40,0 bis 80,0 Gew.-% einer Partikelfraktion von < 0,500 mm, bezogen auf das gesamte thermoplastischen Polyurethan-Pulver und/oder ein Verhältnis von Zentrifugenmittel der Molmasse Mz zu Massenmittel der Molmasse Mw von ≤ 3,0, bevorzugt von 1,5 bis 2,2;

aufweist.

**11.** Verfahren nach einem der vorstehenden Ansprüche, **dadurch gekennzeichnet, dass** das thermoplastische Polyurethan nach Schritt iii. und/oder das thermoplastische Polyurethan-Pulver nach Schritt iv. mit einem Stabilisator aus einer Stabilisatorlösung imprägniert wird, wobei dafür das thermoplastische Polyurethan nach Schritt iii. und/oder das thermoplastische Polyurethan-Pulver nach Schritt iv. in der Stabilisatorlösung dispergiert und anschließend abgetrennt sowie getrocknet wird.

**12.** Verfahren nach Anspruch 11, **dadurch gekennzeichnet, dass** die Stabilisatorlösung

- ein Lösungsmittel, welches aus der Gruppe ausgewählt ist, umfassend oder bestehend aus Lösungsmitteln der Gruppe chlorierte Aromaten; Aromaten; Aliphaten; Ester; Ether; Alkohole; Wasser; Ketone; Nitrile; Carbonate; oder Mischungen davon, oder bevorzugt dem Lösungsmittel A) aus Schritt i. entspricht, wobei das Lösungsmittel vorzugsweise einen Siedepunkt von < 250 °C bei 1 bar aufweist; und
- einen darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate, schwefelhaltige Antioxidantien, 2,2,6,6-Tetramethylpiperidin-Derivate, Benzotriazol-Derivate, Triazin-Derivate, Hydroxybenzophenon-Derivate, Cyanoacrylat-Derivate, Oxalinid-Derivate oder Mischungen davon;

umfasst oder daraus besteht, wobei der Gewichtsanteil des Stabilisators vorzugsweise von 0,001 bis 10,0 Gew.-%, weiter bevorzugt von 0,05 bis 5,0 Gew.-% beträgt, bezogen auf das Gesamtgewicht der Stabilisatorlösung; und/oder

das thermoplastische Polyurethanpulver 0,005 bis 2,0 Gew.-% des Stabilisators aus der Stabilisatorlösung aufweist, bezogen auf das Gesamtgewicht des thermoplastischen Polyurethanpulvers.

**13.** Thermoplastisches Polyurethan-Pulver, erhalten oder erhältlich nach einem Verfahren gemäß einem der Ansprüche 1 bis 12.

**14.** Verwendung eines thermoplastischen Polyurethan-Pulvers gemäß Anspruch 13 in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

**15.** Formteil, erhalten oder erhältlich durch die Verarbeitung eines thermoplastischen Polyurethan-Pulvers gemäß Anspruch 13.

Europäisches Patentamt
European Patent Office
Office européen des brevets

# EUROPÄISCHER RECHERCHENBERICHT

Nummer der Anmeldung
EP 24 21 0190

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2024/227833 A1 (COVESTRO DEUTSCHLAND AG [DE]) 7. November 2024 (2024-11-07)<br>* Ansprüche 1-15; Beispiel 4 *<br>----- | 1-4,6-15 | INV.<br>C08G18/08<br>C08G18/22<br>C08G18/28<br>C08G18/32<br>C08G18/73<br>C08G18/75<br>C08G18/76 |
| A,D | DE 728 981 C (IG FARBENINDUSTRIE AG)<br>7. Dezember 1942 (1942-12-07)<br>* Anspruch 1; Beispiele 19-22, 26 *<br>----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 28. März 2025 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 21 0190

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2025

| Im Recherchenbericht angeführtes Patentdokument | Datum der Veröffentlichung | Mitglied(er) der Patentfamilie | Datum der Veröffentlichung |
|---|---|---|---|
| WO 2024227833 A1 | 07-11-2024 | EP 4458876 A1 | 06-11-2024 |
| | | WO 2024227833 A1 | 07-11-2024 |
| DE 728981 C | 07-12-1942 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 728981 C
- WO 2021122279 A
- EP 3491066 A1
- EP 3512687 B1
- EP 0911142 B1


### In der Beschreibung aufgeführte Nicht-Patentliteratur


- **O. BAYER**. *Angew. Chem.*, 1947, vol. 59 (9), 257-288
- *B.I.O.S. Final Report No. 1472* (22), 47-48
- *CHEMICAL ABSTRACTS*, 31570-04-4
- *CHEMICAL ABSTRACTS*, 237-249-1
- *CHEMICAL ABSTRACTS*, 26741-53-7
- *CHEMICAL ABSTRACTS*, 603-35-0
- *CHEMICAL ABSTRACTS*, 80693-00-1
- *CHEMICAL ABSTRACTS*, 126050-54-2
- *CHEMICAL ABSTRACTS*, 6683-19-8
- *CHEMICAL ABSTRACTS*, 85-60-9
- *CHEMICAL ABSTRACTS*, 23128-74
- *CHEMICAL ABSTRACTS*, 36443-68-2
- *CHEMICAL ABSTRACTS*, 123-28-4
- *CHEMICAL ABSTRACTS*, 693-36-7
- *CHEMICAL ABSTRACTS*, 10595-72-9
- *CHEMICAL ABSTRACTS*, 29598-76-3
- *CHEMICAL ABSTRACTS*, 41484-35-9
- *CHEMICAL ABSTRACTS*, 16545-54-3
- *CHEMICAL ABSTRACTS*, 2500-88-1
- *CHEMICAL ABSTRACTS*, 96-69-5
- *CHEMICAL ABSTRACTS*, 90-66-4
- DK Handbook. Endress+Hauser Messtechnik GmbH&Co., 1999, vol. 2
- **HUNGER et al.** *J. Chem. Eng. Data*, 2010, vol. 55 (5), 2055-2065